# EUROPEAN PATENT SPECIFICATION

(11) **EP 4 072 095 B1**
(45) Date of publication and mention of the grant of the patent: **15.05.2024**
(21) Application number: 21167527.7
(22) Date of filing: 08.04.2021
(51) Int. Cl.: H04L 65/80, H04L 65/4038

(54) **SYSTEMS AND METHODS FOR COMMUNICATION IN CONFERENCE CALL**
SYSTEME UND VERFAHREN ZUR KOMMUNIKATION IN EINEM KONFERENZANRUF
SYSTÈMES ET PROCÉDÉS DE COMMUNICATION DANS UN APPEL EN CONFÉRENCE

(43) Date of publication of application: 12.10.2022
(73) Proprietor: Unify Patente GmbH & Co. KG, 81739 München (DE)
(72) Inventor: Lederer, Thomas, 82211 Herrsching (DE); Klaghofer, Karl, 81373 Munich (DE); Bauer, Lothar, 86932 Puergen (DE)
(74) Representative: Schaafhausen Patentanwälte PartGmbB

(56) References cited:
- EP-A1- 3 203 701
- US-A1- 2004 207 724
- US-A1- 2019 189 117

## Description

### TECHNICAL FIELD

The present disclosure generally relates to systems and methods for communication in a conference call. In particular, the systems and methods relate to communication between a plurality of participants in an Internet Protocol (IP)-based real-time conference call.

### BACKGROUND

There are several different Internet Protocol (IP) based conferencing services available at present. A common problem encountered during IP based conferences is poor IP network quality (for example, slow Virtual Private Network bandwidth access or poor/unstable mobile network coverage when travelling), leading to bad audio, video, or screen share quality.

In an example, when a participant in a Voice over Internet Protocol (VoIP) conference experiences a poor network connection with very limited or unstable bandwidth, that participant and other participants in the VoIP conference suffer from poor audio quality issues, such as choppy voice and cracking sounds. In one example, in a VoIP conference, if participants "X" and "Y" are having poor upload bandwidth but acceptable download bandwidth, then it may cause audio quality issues for all participants in the VoIP conference except the participants "X" and "Y". In another example, if the participants "X" and "Y" are having poor download bandwidth but acceptable upload bandwidth, then it may cause audio quality issues for the participants "X" and "Y", whereas the audio quality remains good for the other participants. In yet another example, if the participants "X" and "Y" are having both poor upload bandwidth and poor download bandwidth, then it causes audio quality issues for all participants.

Further, video (or screen share) over IP conferences require significantly more bandwidth in comparison to VoIP conferences. Poor network quality is a well-known issue in video over IP conferences, which may result in a poor conference experience for the participants. A video feed that keeps freezing, screen sharing failure, and extended, unexplained delays are some of the issues that arise due to poor network quality. In one example, when a presenter of a video over IP conference has a poor uplink bandwidth and is sharing a presentation with other participants of the video over IP conference, then the content of the presentation may not be transmitted properly, resulting in poor presentation, possibly leading to change in meeting content (to another presenter) or stopping and/or re-scheduling of the video over IP conference. Such incidents may be frustrating to not only the presenter but also to the participants of the video over IP conference. In another example, consider an event where a presenter is sharing an Excel sheet with participants during a screen sharing session of a video over IP conference. Due to network issues, the participants may not see the content of the Excel sheet. As a result, the purpose of video over IP conference is defeated.

The prior art document US2004/207724 A1 shows a communication multipoint control unit switching between transmitting "live" media streams and "recorded" media streams. The prior art document US2019/189117 A1 shows providing in-meeting assistance by a virtual assistant responsive to quality issues during a video conference, wherein the virtual assistant may automatically perform actions such as upload and/or download video stream to a lower resolution.

Therefore, the present invention is based on the obj ect to provide systems and methods that allow conference calls and point-to-point two-party calls to continue even in poor network quality conditions.

This object is solved by a method having the features according to claim 1 and a system having the features according to claim 9 for communication between a plurality of participants.

Preferred embodiments of the present invention are defined in the respective dependent claims.

According to the invention, a method for communication between a plurality of participants is described, which includes monitoring, by a communication server, a Quality of Service (QoS) of an upstream communication channel of a first endpoint associated with a first participant being in an Internet Protocol (IP)-based real-time conference call with one or more second endpoints. The method further includes detecting, by the communication server, when the QoS of the upstream communication channel degrades below a predefined threshold. Further, the method includes switching, by the communication server, the upstream communication channel of the first endpoint from a real-time mode to a media streaming mode responsive to the detection. Also, the method includes receiving, by the communication server, media streams from the upstream communication channel of the first endpoint in the media streaming mode. Further, the method includes communicating, by the communication server, the media streams received from the upstream communication channel of the first endpoint to the one or more second endpoints in the media streaming mode.

According to a preferred embodiment, the first participant is at least one of a speaker and a presenter of the IP-based real-time conference call.

According to another preferred embodiment, the method is further characterized by sending, by the communication server, a notification to at least one of the first participant and the one or more second endpoints indicating switching of the upstream communication channel of the first endpoint from the real-time mode to the media streaming mode.

According to another preferred embodiment, the method is further characterized by switching, by the communication server, the upstream communication channel of the first endpoint from the media streaming mode to the real-time mode when the QoS of the upstream communication channel upgrades above the predefined threshold.

According to another preferred embodiment, the upstream communication channel of the first endpoint is switched from the real-time mode to the media streaming mode based on a media type, wherein the media type is at least one of an audio, a video, and a screen share.

According to another preferred embodiment, the method is further characterized by recording, by the communication server, an audio stream provided by the by the first endpoint (102) for playback in the IP-based real-time conference call with a predefined delay.

According to another preferred embodiment, the method is further characterized by monitoring, by the communication server, a QoS of a downstream communication channel of the first endpoint, detecting, by the communication server, when the QoS of the downstream communication channel of the first endpoint degrades below the predefined threshold, and switching, by the communication server, the downstream communication channel of the first endpoint from the real-time mode to the media streaming mode responsive to the detection.

According to another preferred embodiment, the method is further characterized by switching the downstream communication channel of the first endpoint from the media streaming mode to the real-time mode when the QoS of the downstream communication channel upgrades above the predefined threshold.

According to another preferred embodiment, the method is further characterized by receiving, by the communication server, a communication from the upstream communication channel of the one or more second endpoints in the real-time mode. The communication includes at least one of an audio and a text message, recording, by the communication server, the communication received from the upstream communication channel of the one or more second endpoints, and communicating, by the communication server, the recording to the first endpoint in the media streaming mode after a predefined amount of time.

According to the invention, a system for communication between a plurality of participants is described. The system includes a communication server. The communication server is configured to monitor a Quality of Service (QoS) of an upstream communication channel of a first endpoint associated with a first participant being in an Internet Protocol (IP)-based real-time conference call with one or more second endpoints. Further, the communication server is configured to detect when the QoS of the upstream communication channel degrades below a predefined threshold. The communication server is further configured to switch the upstream communication channel of the first endpoint from a real-time mode to a media streaming mode responsive to the detection. Also, the communication server is configured to receive media streams from the upstream communication channel of the first endpoint in the media streaming mode and communicate the media streams received from the upstream communication channel of the first endpoint to the one or more second endpoints in the media streaming mode.

According to a preferred embodiment of the system, the first participant is at least one of a speaker and a presenter of the IP-based real-time conference call.

According to another preferred embodiment of the system, wherein the communication server is further configured to send a notification to at least one of the first participant and the one or more second endpoints indicating switching of the upstream communication channel of the first endpoint from the real-time mode to the media streaming mode.

According to another preferred embodiment of the system, wherein the communication server is further configured to switch the upstream communication channel of the first endpoint from the media streaming mode to the real-time mode when the QoS of the upstream communication channel upgrades above the predefined threshold.

According to another preferred embodiment of the system, wherein the upstream communication channel of the first endpoint is switched from the real-time mode to the media streaming mode based on a media type, wherein the media type is at least one of an audio, and a video, and a screen share.

According to another preferred embodiment of the system, wherein the communication server is further configured to monitor a QoS of a downstream communication channel of the first endpoint; detect when the QoS of the downstream communication channel of the first endpoint degrades below the predefined threshold; and switch the downstream communication channel of the first endpoint from the real-time mode to the media streaming mode responsive to the detection.

Other aspects and advantages of the disclosure will become apparent from the following detailed description, taken in conjunction with the accompanying drawings, which illustrate by way of example the teachings of the disclosure, and are not restrictive.

### BRIEF DESCRIPTION OF THE DRAWINGS

A more complete appreciation of this disclosure and many of the attendant advantages thereof will be readily obtained as the same becomes better understood by reference to the following detailed description when considered in connection with the accompanying drawings, wherein:
FIG. 1 depicts an embodiment of some of the architecture of an embodiment of a system for communication between a plurality of participants in a conference call, according to some embodiments;
FIG. 2 illustrates a notification displayed to the plurality of participants in response to switching of the conference call from a real-time mode to a media streaming mode, according to some embodiments;
FIGS. 3A-3C depict a flow chart illustrating communication between the plurality of participants in the conference call, according to some embodiments; and
FIG. 4 illustrates a method for communication between the plurality of participants in the conference call, according to some embodiments.

### DETAILED DESCRIPTION

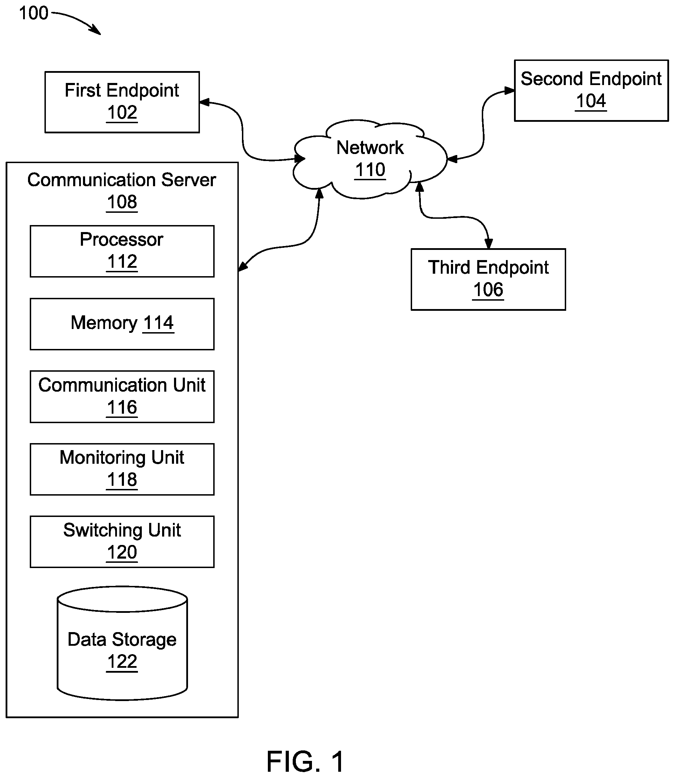

FIG. 1 depicts an embodiment of some of the architecture of an embodiment of a system 100 for communication between a plurality of participants in a conference call, according to some embodiments. As may be understood, the conference call may be a point-to-point call (two-party call) or a multi-party call, i.e., the conference call may involve more than two parties. For descriptive convenience, the parties are referred to as participants. The participants may include a presenter and/or a speaker, and the remaining participants may be attendees. In an example, any of the attendees may become a presenter during the conference call. According to an embodiment, the conference call may be an Internet Protocol (IP)-based real-time conference call. In an example, the conference call may be a Voice over Internet Protocol (VoIP) conference call, video over IP conference call, or a Voice and Video over IP (VVoIP) conference call. The description hereinafter is explained with reference to the VVoIP conference call for the purpose of simplicity and should not be construed as a limitation.

The system 100 may include a first endpoint 102, one or more second endpoints including a second endpoint 104 and a third endpoint 106, a communication server 108, and a network 110 enabling communication between the system components. In an embodiment, each of the first endpoint 102, the second endpoint 104, the third endpoint 106 may be associated with a first participant, a second endpoint and a third participant, respectively. The first participant, the second participant and the third participant may use the first endpoint 102, the second endpoint 104, the third endpoint, respectively, to communicate with each other through an IP-based real-time conference call. The conference call may be enabled using the conference server 108 over the network 110. Each of the first endpoint 102, the second endpoint 104, and the third endpoint 106 may be a user computing device communicatively coupled with the network 110. In an embodiment, each of the first endpoint 102, the second endpoint 104, and the third endpoint 106 may be any workstation, IP-enabled telephone, desktop computer, laptop or notebook computer, netbook, tablet, server, handheld computer, mobile telephone, smartphone or any portable telecommunications device, mobile computing device, or any other type and/or form of computing or telecommunications device that is capable of communication. Further, each of the first endpoint 102, the second endpoint 104, and the third endpoint 106 may include a processor and a memory to perform the operations described herein. In some embodiments, each of the first endpoint 102, the second endpoint 104, and the third endpoint 106 may have different processors, operating systems, and input devices.

In an embodiment, the first endpoint 102, the second endpoint 104, and the third endpoint 106 may exchange data (i.e., send and/or receive data) using their respective communication channels. A communication channel may include an upstream communication channel and a downstream communication channel. In an example, the upstream communication channel may be used to send data, and the downstream communication channel may be used to receive data.

According to some embodiments, users of the first endpoint 102, the second endpoint 104, and the third endpoint 106 may also install an application from an application distribution platform or websites to perform an IP-based real-time conference call. Examples of application distribution platforms include the App Store^{®} for iOS^{®} provided by Apple^{®}, Inc., the Mac App Store provided by Apple^{®}, Inc., GOOGLE PLAY for Android OS provided by Google^{®} Inc., Chrome Webstore for CHROME OS provided by Google^{®} Inc., and Amazon Appstore for Android OS and KINDLE FIRE provided by Amazon.com^{®}, Inc. An application distribution platform may facilitate installation of software on each of the first endpoint 102, the second endpoint 104, and the third endpoint 106. An application distribution platform may include applications for performing IP-based conference calls developed by various developers. In an example, users of the first endpoint 102, the second endpoint 104, and the third endpoint 106 may select, purchase and/or download an application via the application distribution platform. For example, the users of the first endpoint 102, the second endpoint 104, and the third endpoint 106 may install Microsoft Teams^{®} on their respective endpoints. Alternatively, the users may use web-based conferencing solutions through, for example, web browsers instead of installing and using application-based conferencing solutions from the endpoint. For example, the users of the first endpoint 102, the second endpoint 104, and the third endpoint 106 may access and use Microsoft Teams^{®} through the browser on their respective endpoints.

In an embodiment, the first endpoint 102 may be associated with a first participant, the second endpoint 104 may be associated with a second participant, and the third endpoint 106 may be associated with a third participant. In an example, the first participant may be a presenter and/or a speaker of the IP-based real-time conference call, and the second participant and the third participant may be attendees of the IP-based real-time conference call. In an example, one participant, for example, the first participant, may be a presenter, and other participants (for example, the second participant and the third participant) are attendees. In some examples, any of the first participant, the second participant, and the third participant may become presenters or attendees during the course of the IP-based real-time conference call. The description hereinafter is explained with reference to the first participant being the presenter and/or the speaker of the IP-based real-time conference call for the purpose of explanation and should not be construed as a limitation. Although three endpoints, i.e., the first endpoint 102, the second endpoint 104, and the third endpoint 106 are shown to be a part of the IP-based real-time conference call, in some aspects of the present disclosure, more than three endpoints may be involved in the IP-based real-time conference call.

According to an embodiment, the communication server 108 may be any server capable of establishing, managing, and/or controlling IP-based real-time conference calls between the first endpoint 102, the second endpoint 104, and the third endpoint 106 over the network 110. In an embodiment, the communication server 108 may operate as a central server that controls and distributes media information in the IP-based real-time conference calls. The media information may include participant information, audio information, video information, screen sharing information, and other such information. In an example, the audio information and the video information may be indicative of audio content and video content, respectively.

In an embodiment, the communication server 108 may be deployed as and/or executed on any type and form of computing device, for example, a computer, network device, or appliance capable of communicating on any type and form of network (such as the network 110) and performing the operations described herein. In some embodiments, the communication server 108 may be implemented across a plurality of servers, thereby, tasks performed by the communication server 108 may be performed by the plurality of servers. These tasks may be allocated among the cluster of servers by an application, a service, a daemon, a routine, or other executable logic for task allocation. In an embodiment, the communication server 108 may interchangeably be referred to as central communication server 108 or media server 108.

The communication server 108 may implement various protocols to establish the IP-based real-time conference calls between the first endpoint 102, the second endpoint 104, and the third endpoint 106. For example, the communication server 108 may implement Session Initiation Protocol (SIP), Session Description Protocol (SDP), User Datagram Protocol (UDP), Real-time Transport Protocol (RTP), or any other protocol for establishing the IP-based real-time conference calls (hereinafter referred to as conference calls for the sake of brevity). SIP is a standard protocol used for creating, modifying, and terminating communication sessions with participants. The SDP describes communication sessions for the purpose of session announcement, session invitation etc. The SDP conveys information about media streams in communication sessions to allow the recipients of a session description to participate in the communication session. The UDP is used to control transmission of information through the network 110, and the RTP is a transport protocol for communication of real-time audio and video data. In some embodiments, the communication server 108 may establish a communication session with each of the first endpoint 102, the second endpoint 104, and the third endpoint 106. In an embodiment, the communication server 108 may use the aforementioned protocols to communicate with the first endpoint 102, the second endpoint 104, and the third endpoint 106 based on the settings or capabilities of each of the first endpoint 102, the second endpoint 104, and the third endpoint 106.

According to some embodiments, the communication server 108 may include a processor 112 and a memory 114. In an embodiment, the processor 112 may be any logic circuitry that responds to and processes instructions fetched from the memory 114. In many embodiments, the processor 112 may be provided by a microprocessor unit, e.g., those manufactured by Intel Corporation of Mountain View, California; those manufactured by Motorola Corporation of Schaumburg, Illinois; the ARM processor and TEGRA system on a chip (SoC) manufactured by Nvidia of Santa Clara, California; the POWER7 processor, those manufactured by International Business Machines of White Plains, New York; or those manufactured by Advanced Micro Devices of Sunnyvale, California. The processor 112 may utilize instruction-level parallelism, thread-level parallelism, different levels of cache, and multi-core processors. A multi-core processor may include two or more processing units on a single computing component. Examples of multi-core processors include the AMD PHENOM IIX2, INTER CORE i5 and INTEL CORE i7.

The memory 114 may include one or more memory chips capable of storing data and allowing any storage location to be directly accessed by the processor 112. The memory 114 may be Dynamic Random-Access Memory (DRAM) or any variants, including static Random-Access Memory (SRAM), Burst SRAM or SynchBurst SRAM (BSRAM), Fast Page Mode DRAM (FPM DRAM), Enhanced DRAM (EDRAM), Extended Data Output RAM (EDO RAM), Extended Data Output DRAM (EDO DRAM), Burst Extended Data Output DRAM (BEDO DRAM), Single Data Rate Synchronous DRAM (SDR SDRAM), Double Data Rate SDRAM (DDR SDRAM), Direct Rambus DRAM (DRDRAM), or Extreme Data Rate DRAM (XDR DRAM). In some embodiments, the memory 114 may be non-volatile; e.g., non-volatile read access memory (NVRAM), flash memory non-volatile static RAM (nvSRAM), Ferroelectric RAM (FeRAM), Magnetoresistive RAM (MRAM), Phase-change memory (PRAM), conductive-bridging RAM (CBRAM), Silicon-Oxide-Nitride-Oxide-Silicon (SONOS), Resistive RAM (RRAM), Racetrack, Nano-RAM (NRAM), or Millipede memory. The memory 114 may be based on any of the above described memory chips, or any other available memory chips capable of operating as described herein.

According to an embodiment, the communication server 108 may include a communication unit 116, a monitoring unit 118, and a switching unit 120. In an embodiment, the communication unit 116, the monitoring unit 118, and the switching unit 120 may be coupled to the processor 112 and the memory 114. In some embodiments, the communication unit 116, the monitoring unit 118, and the switching unit 120 amongst other units, may include routines, programs, objects, components, data structures, etc., which may perform particular tasks or implement particular abstract data types. The communication unit 116, the monitoring unit 118, and the switching unit 120 may also be implemented as, signal processor(s), state machine(s), logic circuitries, and/or any other device or component that manipulate signals based on operational instructions.

In some embodiments, the communication unit 116, the monitoring unit 118, and the switching unit 120 may be implemented in hardware, instructions executed by a processing unit, or by a combination thereof. The processing unit may comprise a computer, a processor, a state machine, a logic array or any other suitable devices capable of processing instructions. The processing unit may be a general-purpose processor that executes instructions to cause the general-purpose processor to perform the required tasks or, the processing unit may be dedicated to perform the required functions. In some embodiments, the communication unit 116, the monitoring unit 118, and the switching unit 120 may be machine-readable instructions which, when executed by a processor/processing unit, perform any of the desired functionalities. The machine-readable instructions may be stored on an electronic memory device, hard disk, optical disk, or other machine-readable storage medium or non-transitory medium. In an embodiment, the machine-readable instructions may also be downloaded to the storage medium via a network connection. In an example, the machine-readable instructions may be stored in memory 114.

In some embodiments, the communication server 108 may include a data storage 122. In an embodiment, the data storage 122 may store information exchanged during conference calls. In an example, the data storage 122 may store queries, feedbacks, and/or comments provided by the participants during the conference call. In an embodiment, information related to the conference calls stored in the data storage 122 may be periodically or dynamically updated as required.

According to an embodiment, the network 110 may be a private network or a public network. Further, the network 110 may be connected via wired and/or wireless links. Wired links may include Digital Subscriber Line (DSL), coaxial cable lines, or optical fiber lines. Wireless links may include Bluetooth^{®}, Bluetooth Low Energy (BLE), ANT/ANT+, ZigBee, Z-Wave, Thread, Wi-Fi^{®}, Worldwide Interoperability for Microwave Access (WiMAX^{®}), mobile WiMAX^{®}, WiMAX^{®}-Advanced, NFC, SigFox, LoRa, Random Phase Multiple Access (RPMA), Weightless-N/P/W, an infrared channel or a satellite band. The wireless links may also include any cellular network standards to communicate among mobile devices, including standards that qualify as 1G, 2G, 3G, 4G, or 5G. The network standards may qualify as one or more generations of mobile telecommunication standards by fulfilling a specification or standards such as the specifications maintained by the International Telecommunication Union. The 3G standards, for example, may correspond to the International Mobile Telecommuniations-2000 (IMT-2000) specification, and the 4G standards may correspond to the International Mobile Telecommunication Advanced (IMT-Advanced) specification. Examples of cellular network standards include AMPS, GSM, GPRS, UMTS, CDMA2000, CDMA-1xRTT, CDMA-EVDO, LTE, LTE-Advanced, LTE-M1, and Narrowband IoT (NB-IoT). Wireless standards may use various channel access methods, e.g., FDMA, TDMA, CDMA, or SDMA. In some embodiments, different types of data may be transmitted via different links and standards. In other embodiments, the same types of data may be transmitted via different links and standards.

Further, the network 110 may be any type and/or form of network. The geographical scope of the network may vary widely and the network 110 can be a body area network (BAN), a personal area network (PAN), a local-area network (LAN), e.g., Intranet, a metropolitan area network (MAN), a wide area network (WAN), or the Internet. The topology of the network 110 may be of any form and may include, e.g., any of the following: point-to-point, bus, star, ring, mesh, or tree. The network 110 may be an overlay network which is virtual and sits on top of one or more layers of other networks. Also, the network 110 may be of any such network topology as known to those ordinarily skilled in the art capable of supporting the operations described herein. The network 110 may utilize different techniques and layers or stacks of protocols, including, e.g., the Ethernet protocol, the internet protocol suite (TCP/IP), the ATM (Asynchronous Transfer Mode) technique, the SONET (Synchronous Optical Networking) protocol, or the SDH (Synchronous Digital Hierarchy) protocol. The TCP/IP internet protocol suite, may include application layer, transport layer, internet layer (including, e.g., IPv4 and IPv6), or the link layer. The network 110 may be a type of broadcast network, a telecommunications network, a data communication network, or a computer network.

According to an embodiment, to initiate or set up a conference call, the communication server 108 may establish a communication session with each of the first endpoint 102, the second endpoint 104, and the third endpoint 106. According to an embodiment, the communication unit 116 of the communication server 108 may be configured to communicate an invite request to the first participant associated with the first endpoint 102, to the second participant associated with the second endpoint 104, and to the third participant associated with the third endpoint 106 for the upcoming conference call. In an example, the communication unit 116 may be configured to communicate an invite request from the first participant to the second participant and the third participant.

In some embodiments, a host of the conference call may send the invite request to the first participant, the second participant, and the third participant through the communication server 108. In an example, the host may be responsible for organizing and/or managing the conference call. In one example, the host may be one of the first participant, the second participant, and the third participant. In another example, the host may be any other person who may organize the conference call on behalf of the first participant, the second participant, or the third participant. In an example, the invite request may be an email message inviting the participants to attend the conference call. Other types of invitations for participants to attend the conference call that not disclosed are contemplated herein.

In an embodiment, upon receiving acceptance to the invite request or on receiving a request to connect to the conference call from each of the first participant, the second participant, and the third participant, the communication unit 116 may establish the communication session with the first participant, the second participant, and the third participant. In some embodiments, the communication unit 116 may use SIP messages for establishing the communication session with each of the first participant, the second participant, and the third participant. In an example, the SIP messages may be used to setup, manage, and terminate communication sessions for the conference call. Further, in an example, the invite request may also be referred to as a SIP invite request and may include SDP fields with appropriate values that may be indicative of information about the communication session. According to some embodiments, the conference call may be established spontaneously without a need of an invite. In example, the participants may be automatically joined to the conference call as soon as the conference call commences.

After the communication sessions are established, the first endpoint 102 may start sending one or more media streams to the second endpoint 104 and the third endpoint 106 in a real-time mode via its upstream communication channel. In an example, a media stream may include audio (or voice) and/or video tracks. Each track may include a stream of audio and/or video data. In an example, the media stream may include voice data, video data, and/or a screen sharing data. In an embodiment, the first endpoint 102 may send the one or more media streams using the RTP. Also, the first endpoint 102 may use the UDP to send the one or more media streams as a series of small packets. In an embodiment, the one or more media streams from the first endpoint 102 are sent to the second endpoint 104 and the third endpoint 106 via the communication server 108. In response to receiving the one or more media streams from the first endpoint 102, the communication unit 116 may forward the one or more media streams received from the first endpoint 102 to the second endpoint 104 and the third endpoint 106 in the real-time mode. According to an embodiment, the communication unit 116 may establish RTP/UDP media channels for communicating the one or more media streams to the second endpoint 104 and the third endpoint 106.

According to some embodiments, the monitoring unit 118 of the communication server 108 communication server may continuously or periodically monitor a Quality of Service (QoS) of the upstream communication channel of the first endpoint 102 to detect if the QoS of the upstream communication channel degrades below a predefined threshold at least in part due to bandwidth. In an embodiment, the monitoring module 118 may analyze the bandwidth available to the upstream communication channel. In an example, the monitoring module 118 may analyze the available bandwidth to determine when there is insufficient bandwidth or unstable bandwidth to support sending the one or more media streams in the real-time mode.

In an embodiment, the monitoring unit 118 may detect if the QoS of the upstream communication channel of the first endpoint 102 degrades below the predefined threshold based on any of conventional and well-known mechanisms for measuring and determining the sufficiency of the available bandwidth. In an example embodiment, the monitoring unit 118 may detect if the QoS of the upstream communication channel of the first endpoint 102 degrades below the predefined threshold based on Real-Time Transport Control Protocol (RTCP) feedback. RTCP is a protocol that works with RTP to monitor data delivery. The purpose of monitoring delivery is to determine whether RTP is providing the necessary QoS or not.

In an example, the QoS of the upstream communication channel of the first endpoint 102 may degrade below the predefined threshold (i.e., the first participant may experience a poor upload network quality or connection) for different reasons. For example, due to slow Virtual Private Network (VPN) bandwidth access, or when the first participant is attending the conference call using his or her mobile phone or from a remote location (such as a mountainous region), the first participant may experience very poor network coverage.

In response to detecting that the QoS of the upstream communication channel of the first endpoint 102 degrades below the predefined threshold, the switching unit 120 of the communication server 108 may automatically switch the upstream communication channel of the first endpoint 102 from the real-time mode to a media streaming mode. In an example, the media streaming mode is a non-real time mode. In one embodiment, media streaming in the context of the present disclosure may refer to Hypertext Transfer Protocol (HTTP) based streaming techniques. Examples of HTTP based streaming protocols include Apple^{®}'s HLS (Apple^{®}'s HTTP Live streaming), Microsoft^{®} Smooth streaming (Microsoft^{®} specific), and ISO MPEG-DASH standard. In media streaming mode, the network bandwidth requirements are low in comparison to the real-time mode (i.e., the real-time conferencing) as media streaming accepts a media delay of up to several seconds, depending on the nature of the streaming technology. In an embodiment, the switching unit 120 may switch the upstream communication channel of the first endpoint 102 from the real-time mode to the media streaming mode, for example, when the switching unit 120 detects insufficient bandwidth to support real-time communication of the one or more media streams over the upstream communication channel of the first endpoint 102.

Further, the switching unit 120 may switch the upstream communication channel of the first endpoint 102 from the real-time mode to the media streaming mode based on a media type. In an example, the media type may include at least one of an audio, a video, and a screen share. For example, an audio channel may remain in the real-time mode, however, a video channel may be switched to the media streaming mode, depending upon various situations. In some embodiments, the switching unit 120 may also switch the downstream communication channels of the second endpoint 104 and the third endpoint 106 from the real-time mode to the media streaming mode. According to an embodiment, the downstream communication channel of the first endpoint 102 and the upstream communication channels of the second endpoint 104 and the third endpoint 106 may remain in real-time mode.

Upon switching the upstream communication channel of the first endpoint 102 and the downstream communication channels of the second endpoint 104 and the third endpoint 106 from the real-time mode to the media streaming mode, the switching unit 120 may send a notification indicating switching of the upstream communication channel of the first endpoint 102 and the downstream communication channels of the second endpoint 104 and the third endpoint 106 from the real-time mode to the media streaming mode to each of the first endpoint 102, the second endpoint 104, and the third endpoint 106.

In some embodiments, the switching unit 120 may send a visual and/or an audible alert to notify the first participant, the second participant, and the third participant that the real-time mode of conference call has been switched to the media streaming mode. In an example, an audible alert "The conference is currently being paused and will continue in a few seconds" may be sent to the first participant, the second participant, and the third participant. Further, the visual and/or the audible alert sent to the first participant, the second participant, and the third participant on their respective endpoints may last for a few seconds.

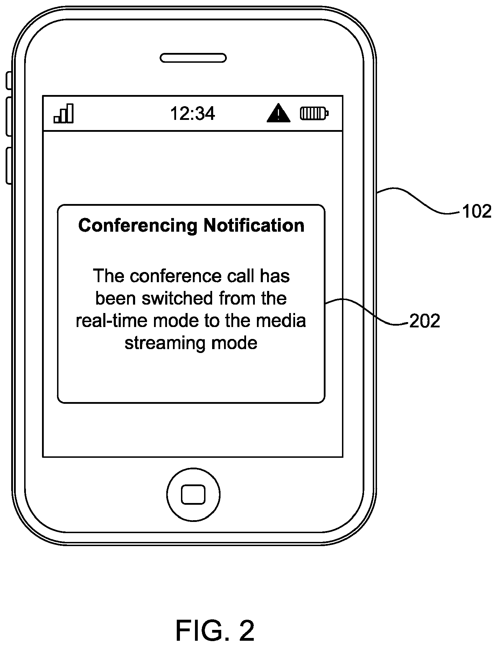

One example of the notification displayed on the first endpoint 102 of the first participant in response to switching of the conference call from the real-time mode to the media streaming mode is illustrated in FIG. 2. In an example, a pop-up notification 202 may be displayed on the first endpoint 102 of the first participant to inform the first participant about the switching of the conference call from the real-time mode to the media streaming mode. In an example embodiment, an application program may be residing on the first endpoint 102 that may be configured to receive the pop-up notification from the communication server 108 and display the pop-up notification on a display of the first endpoint 102. As can be seen in FIG. 2, the pop-up notification 202 reads "The conference call has been switched from the real-time mode to the media streaming mode". In the example of FIG. 2, the pop-up notification 202 doesn't interrupt the user experience, and the pop-up notification 202 doesn't require any user input to get closed. The pop-up notification 202 automatically disappears after a short amount of time, for example, after 10 seconds. A pop-up may refer to an appearance of graphical or textual content on an endpoint. In some examples, the notification (or content) may be presented on the endpoint as part of, or bounded within, a "window" or a user interface element or a dialogue box. Whilst other known examples and embodiments of pop-ups are contemplated herein, these need not be described in full within this disclosure.

Referring again to FIG. 1, in some embodiments, the switching unit 120 may notify the first participant and/or the host about the degradation of the QoS of the upstream communication channel of the first endpoint 102 below the predefined threshold (i.e., about the poor network connection). In an embodiment, the switching unit 120 may send a request to the first participant and/or the host seeking permission to switch the upstream communication channel of the first endpoint 102, and the downstream communication channels of the second endpoint 104 and the third endpoint 106 from the real-time mode to the media streaming mode. According to an embodiment, the first participant and/or the host may be provided with a user interface obj ect, such as a selectable button, icon, or other graphical objects, which may enable the first participant and/or the host to manually provide the permission for switching to the media streaming mode. Accordingly, when the switching unit 120 detects that the QoS of the upstream communication channel of the first endpoint 102 has degraded below the predefined threshold, the first participant and/or the host may be provided with an option to enter into the media streaming mode. In response to receiving the permission from the first participant and/or the host, the switching unit 120 switches the conference call from the real-time mode to the media streaming mode.

After the conference call is switched from the real-time mode to the media streaming mode, the communication unit 116 may establish a connection with each of the first endpoint 102, the second endpoint 104, and the third endpoint 106 for switching the conference call to the media streaming mode. According to some embodiments, the communication unit 116 may establish reliable Transmission Control Protocol (TCP), Transport Layer Security (TLS), or HTTP channels or connections in addition to (or instead of) the current RTP/UDP media channels among the first endpoint 102, the second endpoint 104, the third endpoint 106, and the communication server 108 for switching to the media streaming mode. In an embodiment, RTP/UDP upstream media channels of the first endpoint 102 and the RTP/UDP downstream media channels of the second endpoint 104 and the third endpoint 106 may remain open for later re-use (for example, when switching back to the real-time mode), but no packets may be sent or only a few packets may be sent periodically to keep these channels alive.

Once the connection is established between the first endpoint 102, the second endpoint 104, and the third endpoint 106, the first endpoint 102 may start sending one or more media streams to the communication server 108 in the media streaming mode via the upstream communication channel. In an example, the media stream may include audio data, video data, and screen share data. Further, in an embodiment, the first endpoint 102 may transmit the media stream using the established reliable TCP connection. According to an embodiment, during the media streaming mode, the first endpoint 102 may function as a "media streaming server" and may encode the media stream according to media streaming technology (for example, standard or proprietary) used by the conferencing application. Further, the first endpoint 102 may send or transmit the encoded media stream to the communication server 108 using the established reliable TCP connection.

In some embodiments, the communication unit 116 may forward the received one or more media streams to the second endpoint 104 and to the third endpoint 106 in the media streaming mode. In an embodiment, in case the media stream is encoded by the first endpoint 102, the communication unit 116 may decode the media stream before forwarding the one or more media streams to the second endpoint 104 and the third endpoint 106. According to an embodiment, the communication server 108 may act as a Selective Forwarding Unit (SFU) in order to avoid interworking between the real-time mode and the media streaming mode to be performed at the communication server 108.

According to an embodiment, the second endpoint 104 and the third endpoint 106 may receive the one or more media streams from the communication unit 116 of the communication server 108 in the media streaming mode. In an embodiment, the second endpoint 104 and the third endpoint 106 may receive the one or more media streams via respective downstream communication channel. Further, during the media streaming mode, each of the second endpoint 104 and the third endpoint 106 may act as a "media streaming player". A media streaming player may be a soft client, a Browser client, or any other type of suitable client. In some embodiments, the second endpoint 104 and the third endpoint 106 may buffer segments of the one or more media streams. In an example, after having three segments in the buffer, the media stream may be played at the second endpoint 104 and the third endpoint 106. In an example, the first endpoint 102 sends the media streams in the media streaming mode and the second endpoint 104 and the third endpoint 106 receive the media streams in the media streaming mode. Further, the conference server 108 forwards the media streams. Accordingly, the first endpoint 102 acts as "streaming server" and the second endpoint 104 and the third endpoint 106 act as "media streaming player" which receive the media streams and play it out.

According to an embodiment, when the communication server 108 switches the upstream communication channel of the first endpoint 102 from the real-time mode to the media streaming mode, the second participant and the third participant receive the media stream stream (for example, audio, video, and/or screen share) with a delay T (for example, a couple of seconds later), but in a good quality. Further, the downstream communication channels of the second endpoint 104 and the third endpoint 106 may adjust the delay. Further, when the second endpoint 104 and the third endpoint 106 may still have upstream communication channels in the real-time mode (or have their transmit RTP channels established), the second participant and the third participant may either be in a listening-only mode while the first participant is streaming i.e., RTP transmit channels of the second endpoint 104 and the third endpoint 106 are not used.

In some embodiments, the second participant and the third participant may be enabled to ask questions or provide comments in case they still have their RTP transmit channels active. In some embodiments, the communication server 108 may control the timing differences between the different participants. In an embodiment, the communication server 108 may record queries, feedbacks, and/or comments sent by the second participant and/or the third participant during the conference call. According to an embodiment, the communication server 108 may store the comments and/or questions in the data storage 122. In some embodiments, the communication server 108 may playback the queries, feedbacks, and/or comments into the conference call at any suitable point of time. In an example, the playback of the comments and/or questions into the conference call may be triggered and/or controlled by the first participant, the host, and/or by any other suitable participant or mechanism.

Although it has been described that the downstream communication channels of the second endpoint 104 and the third endpoint 106 are also switched to the media streaming mode, in some embodiments, the downstream communication channels of the second endpoint 104 and the third endpoint 106 may not be switched to the media streaming mode, i.e., may remain in the real-time mode. For example, in scenarios where the second endpoint 104 and the third endpoint 106 do not have "media streaming player" capability, the downstream communication channels of the second endpoint 104 and the third endpoint 106 may not be switched to the media streaming mode. In an embodiment, the second participant and the third participant may be notified about the first participant being in the media streaming mode. Further, in such situations, the communication server 108 may act as a mediator for receiving the media stream from the first endpoint 102 during the media streaming mode and sending the media stream to the second endpoint 104 and the third endpoint 106 in the real-time mode. According to an embodiment, mediation by the communication server 108 between receiving the media stream from the first endpoint 102 in the media streaming mode and transmitting the media stream to the second endpoint 104 and the third endpoint 106 in the real-time mode may introduce further delay due to the additional decoding/encoding step to be done by the communication server 108.

Further, there may be a scenario where the first participant may be a speaker in the conference call, and QoS of the downstream communication channel (in addition to the upstream communication channel) of the first endpoint 102 may degrade below the predefined threshold. In an example, the first participant may experience poor upload and download network connectivity as the first participant may be travelling in a car during the conference call. When the first participant is travelling in the car, the first participant may experience poor audio quality due to lost network packets and may not able to follow the conversation or actively participate in the conference call, or may get dropped out of the conference call. This may result in a poor conference experience for the first participant and also for the second participant and the third participant. In such scenarios, the communication server 108 may switch both the upstream communication channel and the downstream communication channel of the first endpoint 102 from the real-time mode into the media streaming mode. By doing so, the first participant is able to follow the conversation with a good audio quality. The delay of up to a few seconds (T) for the downstream communication channel of the first endpoint 102 may be acceptable and caused by the characteristics of the media streaming mode, including the transmission over the reliable TCP connection using re-transmissions in case of lost packets. Although the present disclosure has been described with reference to only one presenter and/or speaker, the present disclosure also applies to scenarios where there can be multiple speakers or a different presenter and a different speaker, etc.

According to an embodiment, the first participant (even though being in the media streaming mode) is enabled to actively participate in the conference call. For example, if the second participant and/or the third participant ask a question to the first participant, then the first participant would listen to the question with the delay T. The first participant may then respond to the question. In an embodiment, the response (i.e., the audio stream) of the first participant is transmitted via the upstream communication channel of the first endpoint 102 to the communication server 108, and then the communication server 108 may record the response of the first participant. After the communication server 108 completes the recording, the communication server 108 may notify the second participant and the third participant that the response from the first participant is available. In an example, the second participant and the third participant may get a visual and/or audible indication that the response from the first participant is available.

In some embodiments, communication server 108 may switch the upstream communication channel and/or the downstream communication channel from the media streaming mode to the real-time mode when the QoS of the upstream communication channel and/or the downstream communication channel upgrades above the predefined threshold. In an embodiment, the communication server 108 may continuously or periodically monitor the upstream communication channel and/or the downstream communication channel of the first endpoint 102. Further, the communication server 108 may also monitor the upstream communication channels and the downstream communication channels of the second endpoint 104 and the third endpoint 106, and may switch the upstream communication channels and the downstream communication channels of the second endpoint 104 and the third endpoint 106 from the real-time mode to the media streaming mode when QoS of the upstream communication channels and the downstream communication channels degrades below the predefined threshold.

Although the present disclosure has been described with reference to the multi-party VVoIP conference calls, the present disclosure also applies to telecommunication scenarios, such as point-to-point two-party calls (for example, VoIP calls and video calls). In an example, one RTP based call may be switched to a non-RTP based streaming mode call. In an embodiment, point-to-point two-party calls may occur through the conferencing application. In point-to-point two-party calls, the involvement of any conferencing server may not be required.

In an example, the present disclosure is applied during an emergency call. When a video is essential to be delivered as part of the emergency call (for example, to show a visual situation of an accident site to an emergency call taker) but upload bandwidth conditions do not allow for a good quality video to be received by the emergency call taker. In such a scenario, the switching from a real-time mode to a media streaming mode according to embodiments of the present disclosure enables the caller to continue with the video emergency call, including sending of the video to the emergency call taker. For example, when a participant calls an emergency department (for example, 911/112) using a VoIP/Video calling application on his or her mobile device and the participant has a bad upstream connectivity due to his or her local environment/network coverage, then due to the bad upstream bandwidth quality issues in audio/video, the emergency call taker may have problem in understanding/properly assessing the situation. According to aspects of the present disclosure, a streaming connection may be setup in parallel. Thus, if the emergency call taker does not understand the real-time voice, the emergency call taker can in parallel listen to the voice stream, which would deliver a better audio quality but with a delay. As a further example, the bandwidth may be sufficient for a real-time VoIP/RTP connection for speech but not enough for an additional real-time video to deliver the real-time visual situation at the accident. By establishing and leveraging the streaming connection for video, the participant can (although with delays) deliver a streamed video to the first responder.

According to a standard DASH capability, multiple media streams are created by a "media streaming server" with different resolutions. As per DASH standard, a soft client, a Browser client, or any other type of suitable client (for example, media streaming players) may apply for their suitable stream resolution, depending on their own network connection and/or depending on the own receiving endpoint capabilities. According to embodiments of the present disclosure, the MPEG-DASH adaptive streaming standard may be applied to the VVoIP conference scenario and the first endpoint 102 functions as the "media streaming server," and thus it may be easier for the first endpoint 102 of the first participant to create a single resolution media stream to be sent to the communication server 108. The communication server 108 then creates multiple streams (on behalf of the first endpoint 102 of the first participant) from the single resolution media stream as provided by the first endpoint 102 to the communication server 108. Thus, the present disclosure allows for automatic switching between the real-time mode and the media streaming mode in conference calls with bad network connectivity. In the media streaming mode, the TCP introduces a delay of few seconds, however there is no packet loss.

According to conventional techniques, typical streaming segment sizes were around 10 seconds, which has been reduced to around 6 seconds segment size (Apple^{®} recommendation). The optimum throughput in the case of HTTP/1 is between 5 - 8 seconds, whereas with HTTP/2 (new IETF HTTP version since 2015), the optimum segment size in terms of optimizing throughput has reduced to 2 - 3 seconds segment size. Considering that a typical media streaming player buffers 3 segments before starting playback (and assuming a segment size of say three seconds), there is a delay of 3 × 3 = 9 seconds at receiving endpoints (such as the second endpoint 104 and the third endpoint 106). Thus, the present disclosure allows the VVoIP conferences and the point-to-point two-party calls to proceed/continue even in poor network quality conditions.

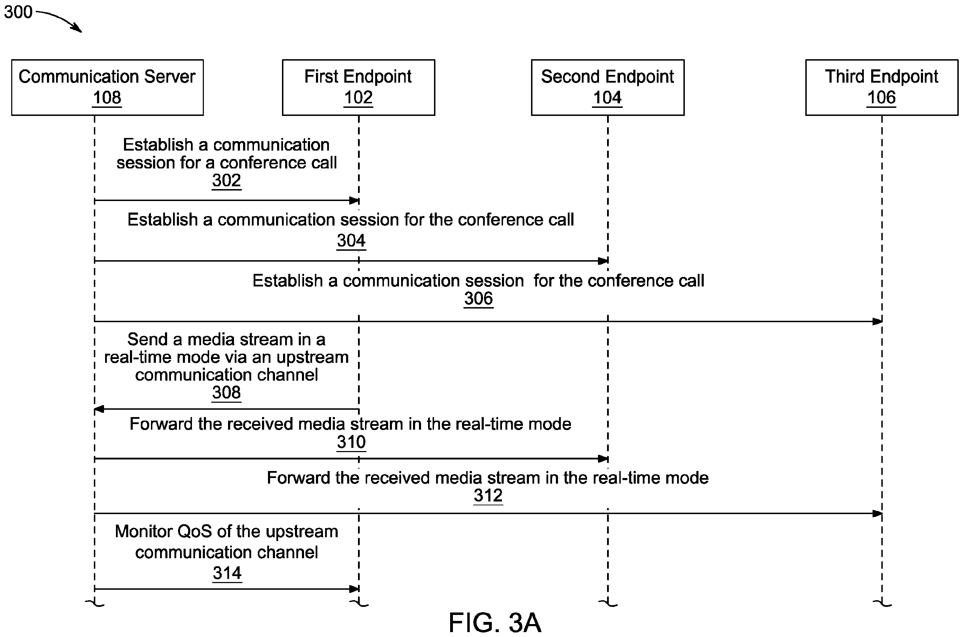

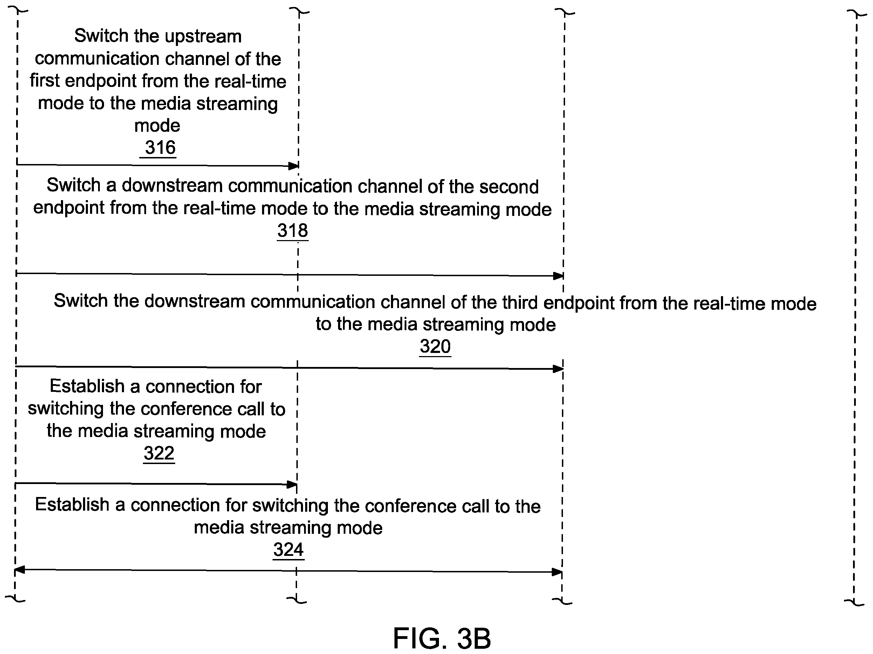

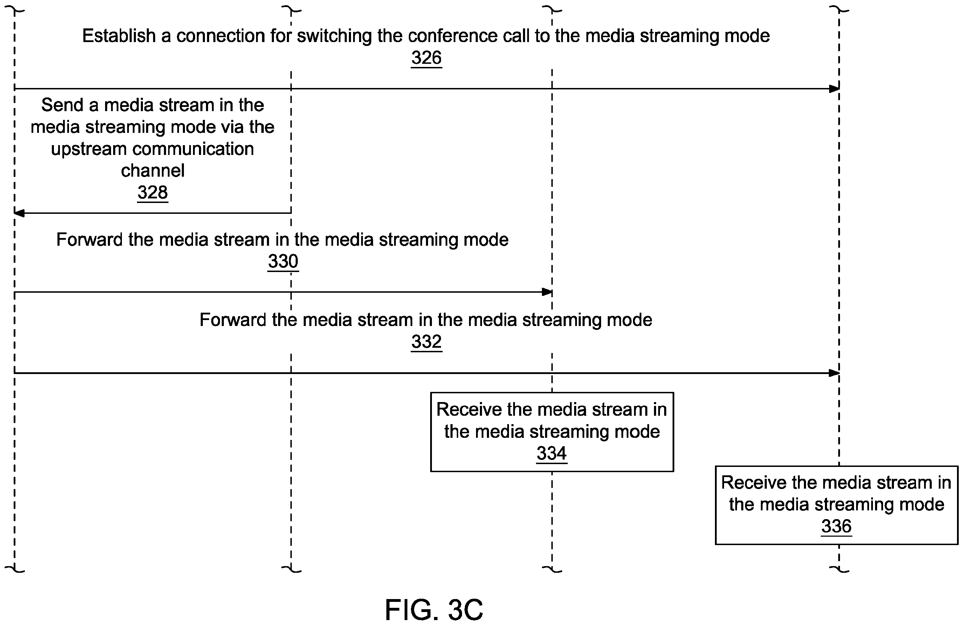

FIGS. 3A-3C depict a flow chart 300 illustrating communication between the plurality of participants in the conference call, according to some embodiments.

At step 302, the communication server 108 may establish a communication session with the first endpoint 102 for a conference call. At step 304, the communication server 108 may establish a communication session with the second endpoint 104 for the conference call. At step 306, the communication server 108 may establish a communication session with the third endpoint 106 for the conference call. In an example, the communication server 108 may establish the communication session with the first endpoint 102, the second endpoint 104, and the third endpoint 108 using the protocols such as SIP and SDP.

At step 308, after the communication sessions are established, the first endpoint 102 may send a media stream in a real-time mode via its upstream communication channel to the communication server 108 to be forwarded to the second endpoint 104 and the third endpoint 106.

At step 310, the communication server 108 may forward the media stream received from the first endpoint 102 to the second endpoint 104 in the real-time mode. At step 312, the communication server 108 may forward the media stream received from the first endpoint 102 to the third endpoint 106 in the real-time mode. According to an embodiment, the communication server 108 may forward the media stream to the second endpoint 104 and the third endpoint 106 using the RTP and the UDP.

At step 314, the communication server 108 may monitor a Quality of Service (QoS) of the upstream communication channel of the first endpoint 102 to detect if the QoS of the upstream communication channel degrades below a predefined threshold at least in part due to bandwidth.

At step 316, in response to detecting that the QoS of the upstream communication channel of the first endpoint 102 degrades below the predefined threshold, the communication server 108 may automatically switch the upstream communication channel of the first endpoint 102 from the real-time mode to a media streaming mode.

At step 318, in response to detecting that the QoS of the upstream communication channel of the second endpoint 104 degrades below the predefined threshold, the communication server 108 may switch the downstream communication channel of the second endpoint 104 from the real-time mode to the media streaming mode. At step 320, in response to detecting that the QoS of the upstream communication channel of the third endpoint 106 degrades below the predefined threshold, the communication server 108 may switch the downstream communication channel of the third endpoint 106 from the real-time mode to the media streaming mode.

At step 322, the communication server 108 may establish a connection with the first endpoint 102 for switching the conference call from the real-time mode to the media streaming mode. At step 324, the communication server 108 may establish a connection with the second endpoint 104 for switching the conference call from the real-time mode to the media streaming mode. At step 326, the communication server 108 may establish a connection with the third endpoint 106 for switching the conference call from the real-time mode to the media streaming mode.

At step 328, the first endpoint 102 may send a media stream to the communication server 108 in the media streaming mode via the upstream communication channel. In an embodiment, the first endpoint 102 may transmit the media stream using the established reliable TCP connection.

At step 330, the communication server 108 may forward the received media stream to the second endpoint 104 in the media streaming mode, and at step 332, the communication server 108 may forward the received media stream to the third endpoint 106 in the media streaming mode.

At step 334, the second endpoint 104 may receive the media stream from the communication server 108 in the media streaming mode. Further, at step 336, the third endpoint 106 may receive the media stream from the communication server 108 in the media streaming mode. According to an embodiment, the second endpoint 104 and the third endpoint 106 may receive the media stream via respective downstream communication channel.

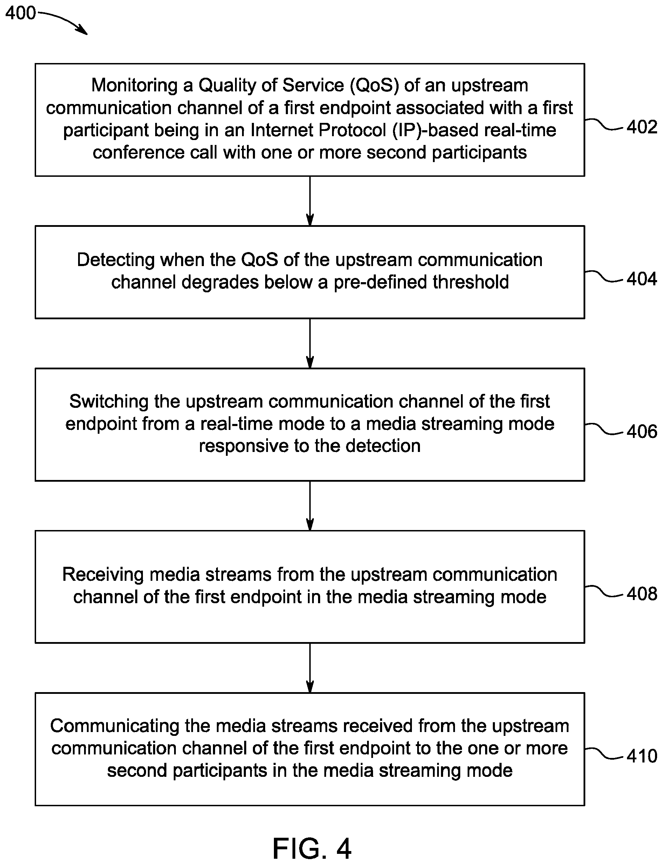

FIG. 4 illustrates a method 400 for communication between the plurality of participants in the conference call, according to some embodiments.

Step 402 of the method 400 includes monitoring a QoS of an upstream communication channel of the first endpoint 102 associated with the first participant being in an Internet Protocol (IP)-based real-time conference call with one or more second participants. In an example, the first participant may be at least one of a speaker and a presenter of the IP-based real-time conference call. According to an embodiment, the communication server 108 may be configured to monitor the QoS of the upstream communication channel of the first endpoint 102 associated with the first participant being in the Internet Protocol (IP)-based real-time conference call with the one or more second participants.

Step 404 of the method 400 includes detecting when the QoS of the upstream communication channel degrades below a predefined threshold. In an example, the upstream communication channel of the first endpoint 102 may degrade below the predefined threshold at least in part due to bandwidth. According to an embodiment, the communication server 108 may be configured to detect when the QoS of the upstream communication channel degrades below a predefined threshold.

Step 406 of the method 400 includes switching the upstream communication channel of the first endpoint 102 from a real-time mode to a media streaming mode responsive to the detection. The media streaming mode is a non-real time mode. In an embodiment, the communication server 108 may be configured to switch the upstream communication channel of the first endpoint 102 from the real-time mode to the media streaming mode responsive to the detection. In some embodiments, the communication server 108 may also be configured to send a notification to at least one of the first participant and the one or more second participants indicative of switching of the upstream communication channel of the first endpoint 102 from the real-time mode to the media streaming mode. Further, the communication server 108 may be configured to switch the upstream communication channel of the first endpoint 102 from the real-time mode to the media streaming mode based on a media type, where the media type is at least one of an audio, a video, and a screen share.

Step 408 of the method 400 includes receiving media streams from the upstream communication channel of the first endpoint 102 in the media streaming mode. In an embodiment, the communication server 108 may be configured to receive the media streams from the upstream communication channel of the first endpoint 102.

Step 410 of the method 400 includes communicating the media streams received from the upstream communication channel of the first endpoint 102 to the one or more second participants in the media streaming mode. According to an embodiment, the communication server 108 may be configured to communicate the media streams received from the upstream communication channel of the first endpoint 102 to the one or more second participants in the media streaming mode. In some embodiments, the communication server 108 may be configured to record an audio stream provided by first endpoint 102 for playback into the IP-based real-time conference call. Also, the communication server 108 may also be configured to switch the upstream communication channel of the first endpoint 102 from the media streaming mode to the real-time mode when the QoS of the upstream communication channel upgrades above the predefined threshold.

In some embodiments, the communication server 108 may also be configured to monitor a QoS of a downstream communication channel of the first endpoint 102, detecting when the QoS of the downstream communication channel of the first endpoint 102 degrades below the predefined threshold, and switch the downstream communication channel of the first endpoint 102 from the real-time mode to the media streaming mode responsive to the detection. Further, the communication server 108 may be configured to switch the downstream communication channel of the first endpoint 102 from the media streaming mode to the real-time mode when the QoS of the downstream communication channel upgrades above the predefined threshold.

While various embodiments of the methods and systems have been described, these embodiments are illustrative and in no way limit the scope of the invention which is solely defined by the appended claims.

## Claims

1. A method (400) for communication between a plurality of participants, the method **characterized by**:
monitoring (402), by a communication server (108), a Quality of Service, QoS, of an upstream communication channel of a first endpoint (102) associated with a first participant being in an Internet Protocol , IP-based real-time conference call with one or more second endpoints (104, 106);
detecting (404), by the communication server (108), when the QoS of the upstream communication channel degrades below a predefined threshold;
switching (406), by the communication server (108), the upstream communication channel of the first endpoint (102) from a real-time mode to a media streaming mode responsive to the detection;
receiving (408), by the communication server (108), media streams from the upstream communication channel of the first endpoint (102) in the media streaming mode; and
communicating (410), by the communication server (108), the media streams received from the upstream communication channel of the first endpoint (102) to the one or more second endpoints (104, 106) in the media streaming mode,
wherein the method is further **characterized by**:
receiving, by the communication server (108), communication from the upstream communication channel of the one or more second endpoints (104, 106) in the real-time mode, wherein the communication comprises at least one of an audio and a text message; and
recording, by the communication server (108), the communication received from the upstream communication channel of the one or more second endpoints (104, 106);
communicating, by the communication server (108), the recording to the first endpoint (102) in the media streaming mode after a predefined amount of time.

2. The method (400) of claim 1, wherein the first participant is at least one of a speaker and a presenter of the IP-based real-time conference call.

3. The method (400) of claim 1 or 2, further **characterized by** sending, by the communication server (108), a notification to at least one of the first participant and the one or more second endpoints (104, 106) indicating switching of the upstream communication channel of the first endpoint (102) from the real-time mode to the media streaming mode.

4. The method (400) of any of the preceding claims, further **characterized by** switching, by the communication server (108), the upstream communication channel of the first endpoint (102) from the media streaming mode to the real-time mode when the QoS of the upstream communication channel upgrades above the predefined threshold.

5. The method (400) of any of the preceding claims, wherein the upstream communication channel of the first endpoint (102) is switched from the real-time mode to the media streaming mode based on a media type, wherein the media type is at least one of an audio, a video, and a screen share.

6. The method (400) of any of the preceding claims, further **characterized by** recording, by the communication server (108), an audio stream provided by the first endpoint (102) for playback in the IP-based real-time conference call with a predefined delay.

7. The method (400) of any of the preceding claims, further **characterized by**:
monitoring, by the communication server (108), a QoS of a downstream communication channel of the first endpoint (102);
detecting, by the communication server (108), when the QoS of the downstream communication channel of the first endpoint (102) degrades below the predefined threshold; and
switching, by the communication server (108), the downstream communication channel of the first endpoint (102) from the real-time mode to the media streaming mode responsive to the detection.

8. The method (400) of claim 7, further **characterized by** switching the downstream communication channel of the first endpoint (102) from the media streaming mode to the real-time mode when the QoS of the downstream communication channel upgrades above the predefined threshold.

9. A system (100) for communication between a plurality of participants, wherein the system comprises a communication server (108) which is configured to perform the method according to claim 1.

10. The system (100) of claim 9, wherein the first participant is at least one of a speaker and a presenter of the IP-based real-time conference call.

11. The system (100) of claim 9 or 10, wherein the communication server (108) is further configured to send a notification to at least one of the first participant and the one or more second endpoints (104, 106) indicating switching of the upstream communication channel of the first endpoint (102) from the real-time mode to the media streaming mode.

12. The system (100) of any of the preceding claims 9 to 11, wherein the communication server (108) is further configured to switch the upstream communication channel of the first endpoint (102) from the media streaming mode to the real-time mode when the QoS of the upstream communication channel upgrades above the predefined threshold.

13. The system (100) of any of the preceding claims 9 to 12, wherein the upstream communication channel of the first endpoint (102) is switched from the real-time mode to the media streaming mode based on a media type, wherein the media type is at least one of an audio, and a video, and a screen share.

14. The system (100) of any of the preceding claims 9 to 13, wherein the communication server (108) is further configured to:
monitor a QoS of a downstream communication channel of the first endpoint (102);
detect when the QoS of the downstream communication channel of the first endpoint (102) degrades below the predefined threshold; and
switch the downstream communication channel of the first endpoint (102) from the real-time mode to the media streaming mode responsive to the detection.

## Patentansprüche

1. Verfahren (400) für die Kommunikation zwischen einer Vielzahl von Teilnehmern, **gekennzeichnet durch**:
die Überwachung (402), **durch** einen Kommunikationsserver (108), einer Dienstqualität, QoS, eines Upstream-Kommunikationskanals eines ersten Endpunkts (102), der mit einem ersten Teilnehmer verbunden ist, der sich in einem Internetprotokoll, IP-basierten Echtzeit-Konferenzgespräch mit einem oder mehreren zweiten Endpunkten (104, 106) befindet;
die Erkennung (404), **durch** den Kommunikationsserver (108), wenn die QoS des Upstream-Kommunikationskanals unter einen vordefinierten Schwellenwert sinkt;
das Umschalten (406), **durch** den Kommunikationsserver (108), des Upstream-Kommunikationskanals des ersten Endpunkts (102) von einem Echtzeit-Modus in einen Medien-Streaming-Modus als Reaktion auf die Erfassung;
das Empfangen (408), **durch** den Kommunikationsserver (108), von Medienströmen von dem Upstream-Kommunikationskanal des ersten Endpunkts (102) in dem Medien-Streaming-Modus; und
die Übermittlung (410), **durch** den Kommunikationsserver (108), der vom Upstream-Kommunikationskanal des ersten Endpunkts (102) empfangenen Medienströme an den einen oder die mehreren zweiten Endpunkte (104, 106) im Medien-Streaming-Modus,
wobei das Verfahren ferner **gekennzeichnet ist durch**:
das Empfangen, **durch** den Kommunikationsserver (108), einer Kommunikation von dem Upstream-Kommunikationskanal des einen oder der mehreren zweiten Endpunkte (104, 106) in dem Echtzeit-Modus, wobei die Kommunikation mindestens eine Audio- oder Textnachricht umfasst; und
die Aufzeichnung, **durch** den Kommunikationsserver (108), des einen oder der mehreren zweiten Endpunkte (104, 106) empfangenen Kommunikation;
die Übermittlung, **durch** den Kommunikations-Server (108), der Aufzeichnung an den ersten Endpunkt (102) im Medien-Streaming-Modus nach einer vordefinierten Zeitspanne.

2. Verfahren (400) nach Anspruch 1, wobei der erste Teilnehmer mindestens ein Sprecher oder ein Moderator der IP-basierten Echtzeit-Konferenzschaltung ist.

3. Verfahren (400) nach Anspruch 1 oder 2, ferner **gekennzeichnet durch** das Senden einer Benachrichtigung **durch** den Kommunikationsserver (108) an mindestens einen der ersten Teilnehmer und den einen oder die mehreren zweiten Endpunkte (104, 106), die das Umschalten des Upstream-Kommunikationskanals des ersten Endpunkts (102) vom Echtzeit-Modus in den Medien-Streaming-Modus anzeigt.

4. Verfahren (400) nach einem der vorhergehenden Ansprüche, ferner **gekennzeichnet durch** das Umschalten, **durch** den Kommunikationsserver (108), des Upstream-Kommunikationskanals des ersten Endpunkts (102) vom Medien-Streaming-Modus in den Echtzeit-Modus, wenn die QoS des Upstream-Kommunikationskanals über den vordefinierten Schwellenwert ansteigt.

5. Verfahren (400) nach einem der vorhergehenden Ansprüche, wobei der Upstream-Kommunikationskanal des ersten Endpunkts (102) auf der Grundlage eines Medientyps vom Echtzeit-Modus in den Medien-Streaming-Modus umgeschaltet wird, wobei der Medientyp mindestens eine Audio-, Video- oder Bildschirmfreigabe ist.

6. Verfahren (400) nach einem der vorhergehenden Ansprüche, ferner **gekennzeichnet durch** das Aufzeichnen eines von dem ersten Endpunkt (102) bereitgestellten Audiostroms **durch** den Kommunikationsserver (108) zur Wiedergabe in der IP-basierten Echtzeit-Konferenzschaltung mit einer vordefinierten Verzögerung.

7. Verfahren (400) nach einem der vorhergehenden Ansprüche, ferner **gekennzeichnet durch**:
die Überwachung, **durch** den Kommunikationsserver (108), einer QoS eines Downstream-Kommunikationskanals des ersten Endpunkts (102);
die Erfassung, **durch** den Kommunikationsserver (108), wenn die QoS des Downstream-Kommunikationskanals des ersten Endpunkts (102) unter den vordefinierten Schwellenwert sinkt; und
das Umschalten, **durch** den Kommunikationsserver (108), des Downstream-Kommunikationskanals des ersten Endpunkts (102) vom Echtzeit-Modus in den Medien-Streaming-Modus in Reaktion auf die Erfassung.

8. Verfahren (400) nach Anspruch 7, ferner **gekennzeichnet durch** das Umschalten des Downstream-Kommunikationskanals des ersten Endpunkts (102) vom Medien-Streaming-Modus in den Echtzeit-Modus, wenn die QoS des Downstream-Kommunikationskanals über den vordefinierten Schwellenwert ansteigt.

9. System (100) zur Kommunikation zwischen einer Vielzahl von Teilnehmern, wobei das System einen Kommunikationsserver (108) umfasst, der zur Durchführung des Verfahrens nach Anspruch 1 konfiguriert ist.

10. System (100) nach Anspruch 9, wobei der erste Teilnehmer mindestens ein Sprecher oder ein Moderator der IP-basierten Echtzeit-Konferenzschaltung ist.

11. System (100) nach Anspruch 9 oder 10, wobei der Kommunikationsserver (108) ferner so konfiguriert ist, dass er eine Benachrichtigung mindestens an den ersten Teilnehmer oder einem oder mehreren der zweiten Endpunkte (104, 106) sendet, die das Umschalten des Upstream-Kommunikationskanals des ersten Endpunkts (102) von dem Echtzeit-Modus in den Medien-Streaming-Modus anzeigt.

12. System (100) nach einem der vorangehenden Ansprüche 9 bis 11, wobei der Kommunikationsserver (108) ferner so konfiguriert ist, dass er den Upstream-Kommunikationskanal des ersten Endpunkts (102) vom Medien-Streaming-Modus in den Echtzeit-Modus umschaltet, wenn die QoS des Upstream-Kommunikationskanals über den vordefinierten Schwellenwert ansteigt.

13. System (100) nach einem der vorangehenden Ansprüche 9 bis 11, wobei der Kommunikationsserver (108) ferner so konfiguriert ist, dass er den Upstream-Kommunikationskanal des ersten Endpunkts (102) vom Medien-Streaming-Modus in den Echtzeit-Modus umschaltet, wenn die QoS des Upstream-Kommunikationskanals über den vordefinierten Schwellenwert ansteigt.

14. System (100) nach einem der vorangehenden Ansprüche 9 bis 13, wobei der Kommunikationsserver (108) ferner konfiguriert ist, um:
eine QoS eines Downstream-Kommunikationskanals des ersten Endpunkts (102) zu überwachen;
zu erkennen, wenn die QoS des Downstream-Kommunikationskanals des ersten Endpunkts (102) unter den vordefinierten Schwellenwert sinkt; und
um den Downstream-Kommunikationskanal des ersten Endpunkts (102) als Reaktion auf die Erkennung vom Echtzeit-Modus in den Medien-Streaming-Modus.umzuschalten.

## Revendications

1. Procédé (400) de communication entre plusieurs participants, **caractérisé par**:
la surveillance (402), par un serveur de communication (108), de la qualité de service, QoS, d'un canal de communication en amont d'un premier point d'extrémité (102) associé à un premier participant à une conférence téléphonique en temps réel basée sur le protocole Internet, IP, avec un ou plusieurs deuxièmes points d'extrémité (104, 106);
la détection (404), par le serveur de communication (108), si la qualité de service du canal de communication en amont se dégrade en dessous d'un seuil prédéfini;
la commutation (406), par le serveur de communication (108), du canal de communication en amont du premier point d'extrémité (102) d'un mode de temps réel à un mode de diffusion en continu des médias en réponse à la détection;
la réception (408), par le serveur de communication (108), de flux de médias provenant du canal de communication en amont du premier point d'extrémité (102) en mode de diffusion en continu des médias; et
la communication (410), par le serveur de communication (108), des flux de médias reçus du canal de communication en amont du premier point d'extrémité (102) à un ou plusieurs deuxièmes points d'extrémité (104, 106) en mode de diffusion en continu des médias,
le procédé se caractérisant également par:
la réception, par le serveur de communication (108), d'une communication provenant du canal de communication en amont d'un ou de plusieurs seconds points d'extrémité (104, 106) en mode de temps réel, la communication comprenant au moins un message audio ou un message texte; et
l'enregistrement, par le serveur de communication (108), de la communication reçue du canal de communication en amont d'un ou de plusieurs seconds points d'extrémité (104, 106);
la communication, par le serveur de communication (108), de l'enregistrement au premier point d'extrémité (102) en mode de diffusion en continu des médias après un laps de temps prédéfini.

2. Procédé (400) de la revendication 1, dans lequel le premier participant est au moins un orateur ou présentateur de la conférence téléphonique en temps réel sur IP.

3. Procédé (400) de la revendication 1 ou 2, caractérisé également par l'envoi, par le serveur de communication (108), d'une notification à au moins un des premiers participants et à un ou plusieurs seconds points d'extrémité (104, 106) indiquant la commutation du canal de communication en amont du premier point d'extrémité (102) du mode en temps réel au mode de diffusion en continu des médias.

4. Procédé (400) selon l'une des revendications précédentes, caractérisé également par la commutation, par le serveur de communication (108), du canal de communication en amont du premier point d'extrémité (102) du mode de diffusion en continu des médias au mode en temps réel lorsque la qualité de service du canal de communication en amont passe au-dessus du seuil prédéfini.

5. Procédé (400) selon l'une des revendications précédentes, dans lequel le canal de communication en amont du premier point d'extrémité (102) est commuté du mode en temps réel au mode de diffusion en continu des médias sur la base d'un type de média, le type de média étant au moins un partage audio, vidéo ou d'écran.

6. Procédé (400) selon l'une des revendications précédentes, caractérisé également par l'enregistrement, par le serveur de communication (108), d'un flux audio fourni par le premier point d'extrémité (102) pour lecture dans la conférence téléphonique en temps réel basée sur IP avec un délai prédéfini.

7. Procédé (400) selon l'une des revendications précédentes, caractérisé également par:
la surveillance, par le serveur de communication (108), d'une qualité de service d'un canal de communication en aval du premier point d'extrémité (102);
la détection, par le serveur de communication (108), lorsque la qualité de service du canal de communication en aval du premier point d'extrémité (102) se dégrade en dessous du seuil prédéfini; et
la commutation, par le serveur de communication (108), du canal de communication en aval du premier point d'extrémité (102) du mode en temps réel au mode de diffusion en continu des médias en réponse à la détection.

8. Procédé (400) de la revendication 7, caractérisée également par la commutation du canal de communication en aval du premier point d'extrémité (102) du mode de diffusion en continu des médias au mode en temps réel lorsque la qualité de service du canal de communication en aval dépasse le seuil prédéfini.

9. Système (100) de communication entre plusieurs participants, comprenant un serveur de communication (108) configuré pour réaliser le procédé selon la revendication 1.

10. Système (100) selon la revendication 9, dans lequel le premier participant est au moins un orateur ou présentateur de la conférence téléphonique en temps réel sur IP.

11. Système (100) selon la revendication 9 ou 10, dans lequel le serveur de communication (108) est également configuré pour envoyer une notification au moins au premier participant ou à un ou plusieurs seconds points d'extrémité (104, 106) indiquant la commutation du canal de communication en amont du premier point d'extrémité (102) du mode en temps réel au mode de diffusion en continu.

12. Système (100) selon l'une des revendications précédentes 9 à 11, dans lequel le serveur de communication (108) est également configuré pour faire passer le canal de communication en amont du premier point d'extrémité (102) du mode de diffusion en continu des médias au mode en temps réel lorsque la qualité de service du canal de communication en amont dépasse le seuil prédéfini.

13. Système (100) selon l'une des revendications précédentes 9 à 11, dans lequel le serveur de communication (108) est également configuré pour faire passer le canal de communication en amont du premier point d'extrémité (102) du mode de diffusion multimédia au mode en temps réel lorsque la qualité de service du canal de communication en amont est supérieure au seuil prédéfini.

14. Système (100) selon l'une des revendications précédentes 9 à 13, dans lequel le serveur de communication (108) est également configuré pour:
surveiller la qualité de service d'un canal de communication en aval du premier point d'extrémité (102);
détecter quand la qualité de service du canal de communication en aval du premier point d'extrémité (102) se dégrade en dessous du seuil prédéfini; et
faire passer le canal de communication en aval du premier point d'extrémité (102) du mode en temps réel au mode de diffusion en continu des médias en réponse à la détection.
